# FASCICULE DE BREVET EUROPEEN

(11) **EP 1 141 661 B1**
(45) Date de publication et mention de la délivrance du brevet: **11.05.2005**
(21) Numéro de dépôt: 99956099.8
(22) Date de dépôt: 19.11.1999
(51) Int. Cl.: G01D 5/14, G01B 7/02, G01B 7/30, G01B 7/00, G01D 5/16

(54) **CAPTEUR DE POSITION A SONDE DE HALL**
LAGESENSOR MIT HALLSONDE
POSITION SENSOR WITH HALL PROBE

(30) Priorité: 20.11.1998 FR 9814667
(43) Date de publication de la demande: 10.10.2001
(73) Titulaire: Moving Magnet Technologies (S.A.), 25000 Besançon (FR)
(72) Inventeur: GANDEL, Pierre, F-25660 Montfaucon (FR); BUAILLON, Yann, 25000 Besançon (FR)
(74) Mandataire: Breese, Pierre
(86) Numéro de dépôt international: PCT/FR1999/002856
(87) Numéro de publication internationale: WO 2000/031505

(56) Documents cités:
- EP-A- 0 611 951
- EP-A- 0 798 541
- EP-A- 0 800 055
- WO-A-97/16736
- FR-A- 2 670 286
- FR-A- 2 691 534
- US-A- 4 639 667

## Description

La présente invention concerne le domaine de la métrologie, et plus précisément le domaine des capteurs de position sans contact à sondes de Hall.

On connaît des capteurs à sonde de Hall permettant de déterminer la position linéaire ou angulaire d'un aimant permanent par rapport à une structure statorique.

On connaît également le brevet français FR2670286 concernant un capteur magnétique de position et de vitesse à sonde de Hall permettant l'acquisition de la position ou de la vitesse dans une seule dimension.

Le brevet européen EP 800055 décrit un capteur de positions linéaire et angulaire. Ce capteur ne décrit pas deux entrefers, et délivre des signaux analogiques difficilement exploitables car non linéaires, de faible niveau. De tels capteurs présentent deux voies qui ne sont pas indépendantes.

D'autres brevets tels le brevet US 4639667 ou WO 9716736 décrivent des capteurs fonctionnant selon des principes ne permettant pas de délivrer des signaux linéaires et indépendants, représentatif de la position dans deux dimensions.

Le but de l'invention est de proposer un capteur permettant de mesurer une position dans l'espace, selon deux degrés de liberté indépendants.

A cet effet, l'invention concerne dans son acception la plus générale un capteur de position comportant au moins une structure statorique définissant un entrefer secondaire à l'intérieur duquel est logée au moins une sonde de Hall, et un aimant mobile dans un entrefer principal, caractérisé en ce que la structure statorique est composée de pièces statoriques définissant au moins un premier entrefer secondaire dans lequel est logée au moins une première sonde de Hall délivrant un signal fonction du déplacement de l'aimant mobile par rapport à un premier degré de liberté, et au moins un deuxième entrefer secondaire dans lequel est logée au moins une deuxième sonde de Hall délivrant un signal fonction du déplacement de l'aimant mobile par rapport à un deuxième degré de liberté.

De préférence, les entrefers secondaires sont formés de deux paires d'entrefers secondaires. Chaque paire d'entrefers secondaires contient deux sondes de Hall disposées de part et d'autre de l'intersection de la première paire d'entrefers secondaires avec la deuxième paire d'entrefers secondaires, et des moyens de sommation des signaux électriques fournis par les sondes de Hall placées dans un même entrefer, pour délivrer un signal résultant sensiblement proportionnel à la position de l'aimant selon le degré de liberté correspondant à chacune des paires de sondes de Hall.

Avantageusement, la structure statorique est composée de 4 pôles en un matériau magnétique doux définissant entre eux deux paires d'entrefers secondaires se croisant en un point médian et en ce que l'entrefer principal est plan.

Selon une première variante, les pôles statoriques sont constitués par 4 pièces rectangulaires solidaires d'une base amagnétique et placés en vis-à-vis d'une culasse et définissant entre elles deux paires d'entrefers secondaires perpendiculaires.

Selon un mode de réalisation préféré, le rapport L/E entre l'épaisseur L de l'aimant et l'épaisseur E de l'entrefer est comprise entre 1 et 2.

Selon une autre variante préférée, les dimensions des entrefers secondaires sont C₁+E et C₂+E, où C₁ et C₂ désignent la course de l'aimant mobile selon les deux directions des entrefers secondaires.

Selon une deuxième variante de réalisation, l'aimant est en forme de demi - tube et est mobile selon un premier degré de liberté en translation axiale et selon un second degré de liberté en rotation axiale par rapport à une structure statorique formée de 4 pôles statoriques en forme de demi-bagues, et en ce qu'il comporte une première paire de sondes de Hall placées dans une première paire d'entrefers secondaires dans le plan transversal médian de la structure statorique, pour la mesure de la position selon le premier degré de liberté, et une deuxième paire de sondes de Hall placées dans un second entrefer secondaire longitudinal constitué par les fentes longitudinales séparant les demi-bagues statoriques.

Selon une troisième variante de réalisation, l'aimant est en forme de demi - tube et est mobile selon un premier degré de liberté en translation axiale et selon un second degré de liberté en rotation axiale par rapport à une structure statorique cylindrique formée de 4 pôles statoriques en forme de demi-cylindres, et en ce qu'il comporte une première paire de sondes de Hall placées dans une première paire d'entrefers secondaires dans le plan transversal médian de la structure statorique, pour la mesure de la position selon le premier degré de liberté, et une deuxième paire de sondes de Hall placées dans un second entrefer secondaire longitudinal dans le plan médian longitudinal séparant les demi-cylindres statoriques.

Selon un mode de réalisation particulier, les bords longitudinaux des demi-cylindres statoriques sont chanfreinés.

Selon une quatrième variante de réalisation, le capteur selon l'invention est caractérisé en ce que l'aimant est de forme sphérique ou demi sphérique et est mobile en rotation sphérique par rapport à une structure statorique en forme de calotte sphérique formée de 4 pôles statoriques en forme de secteur de calotte, et en ce qu'il comporte une première paire de sondes de Hall placées dans une première paire d'entrefers secondaires dans un premier plan médian de la structure statorique, pour la mesure de la position selon le premier degré de liberté, et une deuxième paire de sondes de Hall placées dans un second entrefer secondaire longitudinal dans un second plan médian.

Selon une cinquième variante de réalisation, le capteur est caractérisé en ce que l'aimant est de forme sphérique ou demi-sphérique et est mobile en rotation sphérique par rapport à une structure statorique formée de 4 pôles statoriques de forme intérieure sphérique situés autour de l'équateur de l'aimant, et en ce qu'il comporte une première paire de sondes de Hall placées dans une première paire d'entrefers secondaires dans un premier plan médian de la structure statorique, pour la mesure de la position selon le premier degré de liberté, et une deuxième paire de sondes de Hall placées dans un second entrefer secondaire longitudinal dans un second plan médian.

De préférence, l'entrefer principal est de forme sphérique.

Selon une sixième variante de réalisation, le capteur est caractérisé en ce que l'aimant est de forme sphérique ou demi-sphérique et est mobile en rotation sphérique autour d'une structure statorique de forme sphérique formée de 4 pôles statoriques en forme de quart de sphère, et en ce qu'il comporte une première paire de sondes de Hall placées dans une première paire d'entrefers secondaires dans un premier plan médian de la structure statorique, pour la mesure de la position selon le premier degré de liberté, et une deuxième paire de sondes de Hall placées dans un second entrefer secondaire longitudinal dans un second plan médian.

Avantageusement, les secteurs statoriques présentent des chanfreins.

L'invention sera mieux comprise à la lecture de la description qui suit, se référant à des exemples non limitatifs de réalisation, illustrés par les dessins annexés où :
- Les figures 1 et 2 représentent une vue schématique respectivement de la partie statorique et selon une vue transversale d'une première variante de réalisation sous la forme d'un capteur linéaire XY ;
- les figures (3a) et (3b) donnent l'allure typique des résultats de mesure pour plusieurs déplacements de l'aimant ;
- la figure 4 représente une vue en perspective d'un capteur XY selon la première variante ;
- la figure 5 représente une vue partielle d'un capteur linéaire angulaire selon l'invention ;
- les figures 6 et 7 représentent des vues partielles d'un capteur linéaire angulaire selon une variante de réalisation ;
- la figure 8 représente une vue partielle d'une autre variante de réalisation d'un capteur linéaire angulaire selon l'invention ;
- la figure 9 et 9' représentent respectivement une vue en perspective et en coupe d'un capteur sphérique à deux degrés de liberté en rotation ;
- la figure 10 représente une vue éclatée d'un aimant et de sa culasse pour un tel capteur sphérique ;
- la figure 11 représente un mode de réalisation d'un capteur sphérique plus facile à industrialiser ;
- la figure 12 représente une vue d'un aimant pour un capteur sphérique, monté sur sa culasse et seul ;
- la figure 13 représente une autre variante de réalisation d'un capteur sphérique ;
- la figure 14 représente une vue partielle d'une autre variante de réalisation d'un capteur sphérique ;
- les figures 15 et 16 représentent des vues en vue partielle et en vue transversale d'un capteur linéaire bidirectionnel à deux sondes de Hall :
- les figures 17 et 18 représentent des vues d'un capteur linéaire rotatif à deux sondes de Hall ;
- les figures 19 et 20 représentent des vues d'une variante d'un capteur linéaire rotatif à deux sondes de Hall.

L'invention concerne dans sa généralité un nouveau type de capteurs permettant de capter la position d'une partie mobile suivant 2 degrés de liberté.

Les applications visées sont notamment :
- Applications informatiques : souris, joystick
- Applications industrielles : Pick and place
- Applications automobiles : Levier de vitesses, assistance au passage de vitesses.

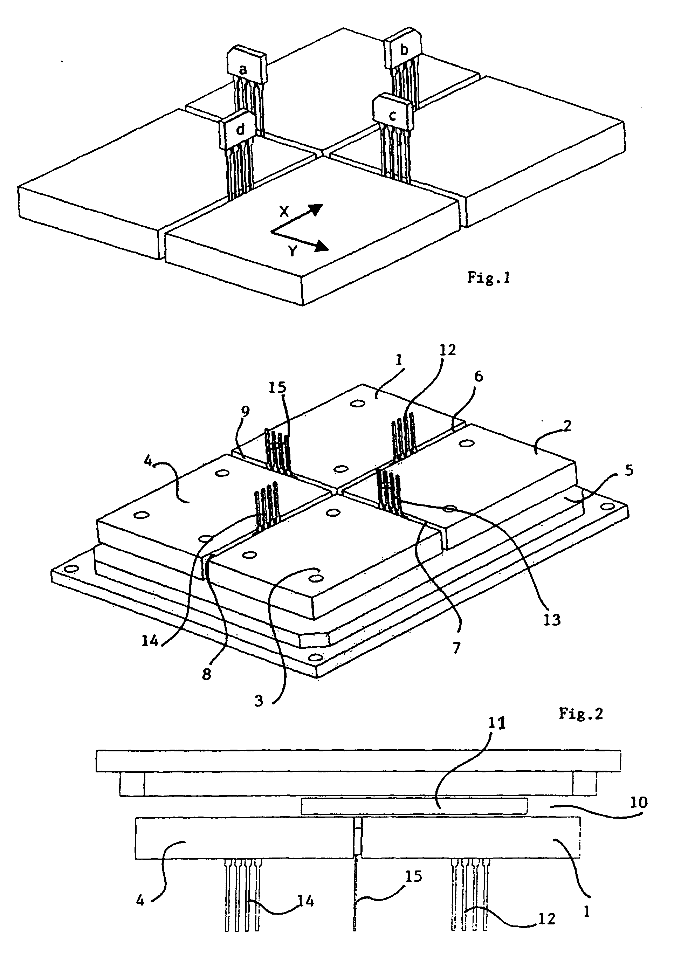

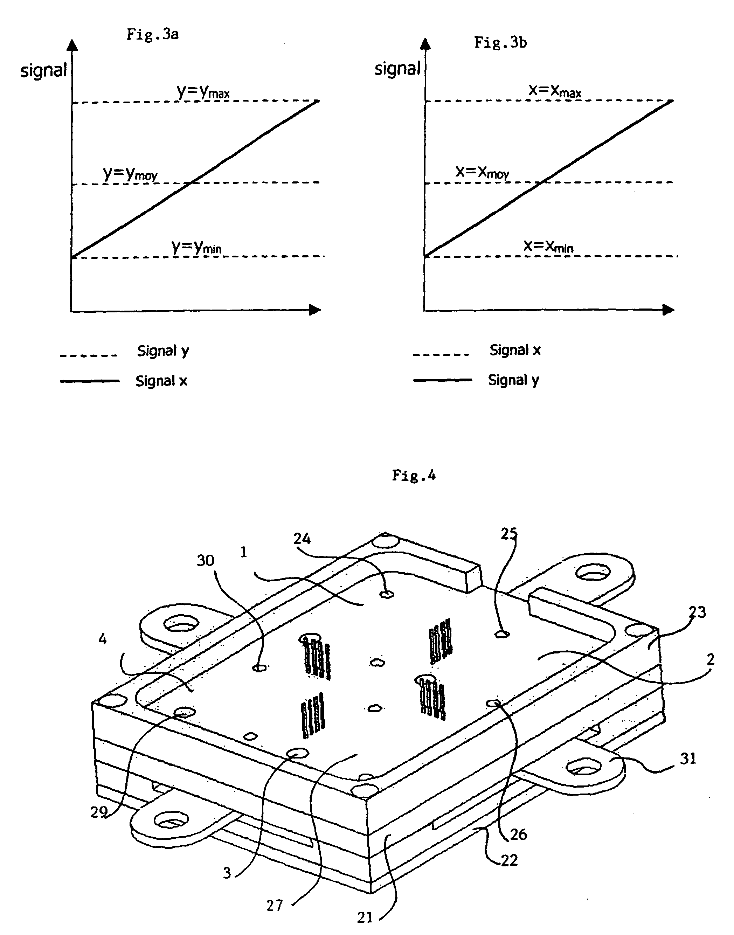

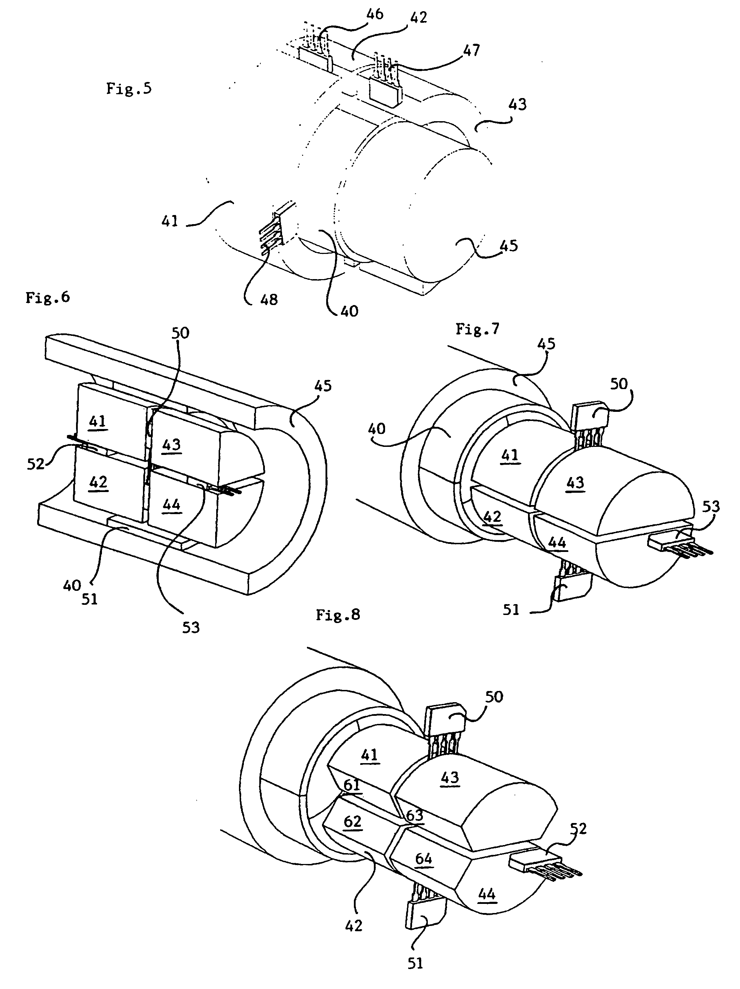

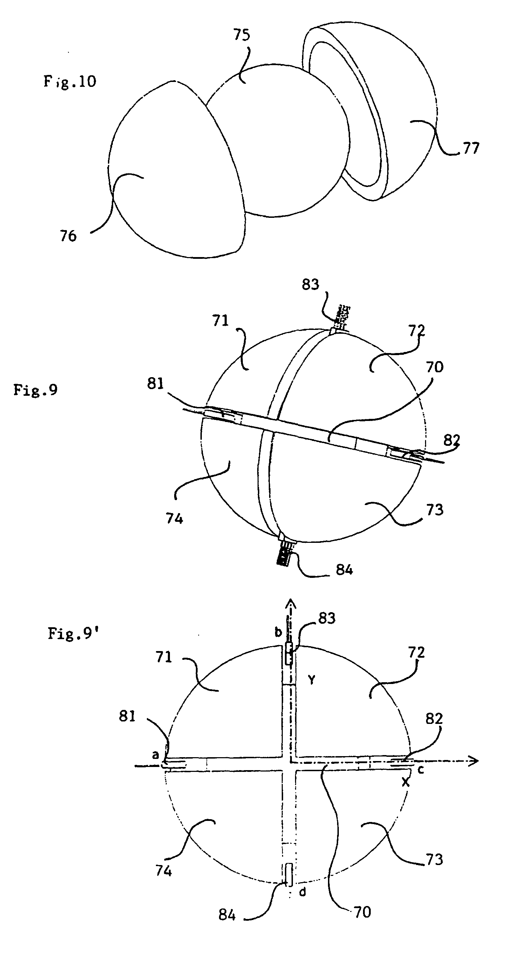

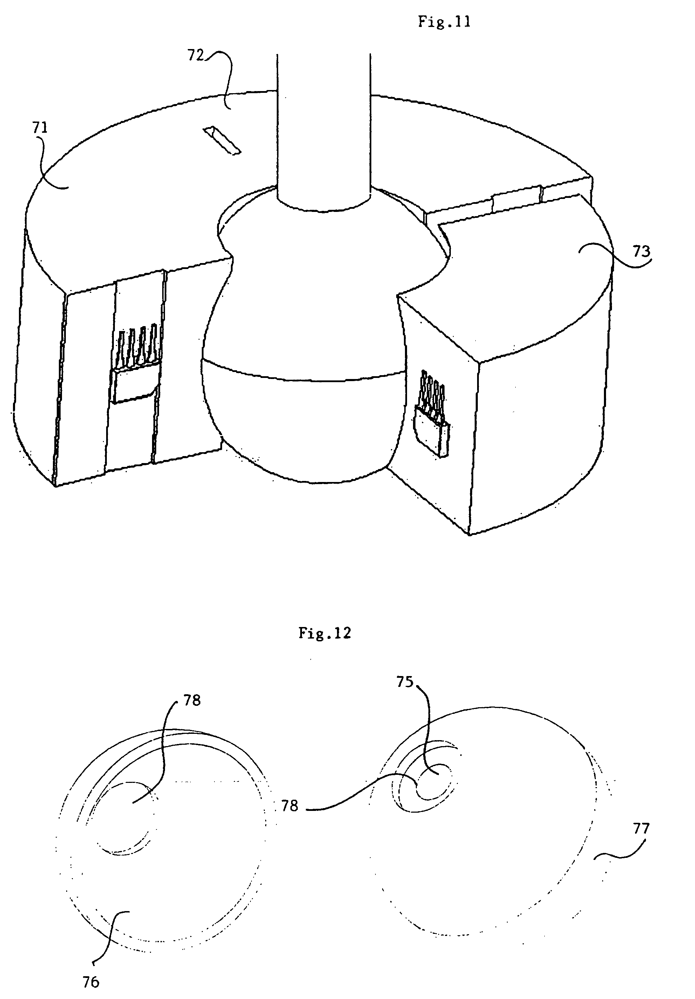

Les figures 1 et 2 représentent une vue schématique respectivement de la partie statorique et selon une coupe transversale d'une première variante de réalisation sous la forme d'un capteur linéaire XY.

L'objectif est de connaître le déplacement d'une partie mobile dans un plan à tout instant, sur une course donnée.

Le capteur représenté en figure 1 et 2 présente 4 pôles statoriques (1 à 4) en un matériau magnétique doux, de forme carrée, séparés d'une culasse ferromagnétique (5) par un entrefer principal (10).

Un aimant mince (11) aimanté transversalement est mobile à l'intérieur de l'entrefer principal.

Les 4 pôles statoriques définissent par ailleurs entre eux 4 entrefers secondaires (6 à 9). Dans chacun d'entre eux, on place une sonde de Hall (12 à 15) afin de déterminer l'induction magnétique circulant d'un pôle à l'autre de par l'interaction entre l'aimant (11) et la masse de fer de la structure statorique formée par les pôles statoriques (1 à 4) et la culasse (5).

Le capteur est donc composé d'un aimant plat rectangulaire (11), de 4 pôles magnétiques doux rectangulaires (1 à 4), de 4 sondes de Hall (12 à 15) (ou tout autre composant sensible à la variation de l'induction magnétique), et d'une culasse ferromagnétique rectangulaire (5).

En déplaçant l'aimant, on crée une variation du potentiel magnétique de chaque pôle qui modifie l'induction mesurée dans chaque sonde. L'un des points de l'invention consiste en l'addition des signaux des sondes. En effet, la somme des signaux fournis par les sondes (12) et (14) est une fonction linéaire du déplacement suivant l'axe X et la somme des signaux fournis par les sondes (13) et (15) est une fonction linéaire du déplacement suivant l'axe Y. On peut donc obtenir un signal aisément exploitable en ajoutant ces signaux par un montage électronique sommateur.

On aura alors 2 signaux indépendants, respectivement linéaires par rapport aux déplacements en X et en Y.

La compensation de la variation de comportement de l'aimant en température peut être obtenue en utilisant des sondes simples doublées d'un circuit adéquat, mais on lui préférera l'adoption de circuits intégrés comprenant les fonctions de sonde de Hall et de compensation.

Les figures (3a) et (3b) donnent l'allure typique des résultat de mesure pour plusieurs déplacements de l'aimant.

Soit L l'épaisseur de l'aimant, E l'entrefer et cₓ et c_{y} les courses du capteur dans les deux dimensions.

On conseillera d'utiliser un rapport L/E compris entre 1 et 2.

Si l'on prend pour dimensions minimales des stators (cₓ + E) et (c_{y} + E) dans le plan de mesure, la linéarité du signal sera effective sur les deux axes.

Ce design peut aisément être intégré dans un système compact, selon la figure 4.

L'aimant est alors inséré dans un support (31) glissant entre deux entretoises (21) et (22). Les pôles (1 à 4) sont fixés sur une base non magnétique (23) et l'ensemble est lié par des organes de fixation rigides (24 à 30), par exemple des vis, goupilles....

Le support (31) présente des pattes de fixation pour la liaison avec l'organe dont on veut déterminer la position.

On obtient alors un ensemble intégrable, aux signaux facilement exploitables.

La figure 5 représente une vue schématique partielle d'un capteur (x,Θ) mixte (linéaire + angulaire)

Ce système est composé des pièces suivantes :
- Un aimant demi bague (40), aimanté radialement. Selon les exigences du système, il pourra être collé à la culasse cylindrique (45) ou bien mobile entre la culasse et les stators.
- 4 stators ferromagnétiques (41 à 44) en demi-bagues (le quatrième stator n'est pas représenté sur la figure 5, afin de rendre l'aimant visible).
- 4 sondes de Hall (46 à 49)
- Une culasse ferromagnétique cylindrique (45), qui peut être pleine ou non.

Un autre mode de réalisation de ce capteur linéaire-angulaire est représenté sur les figures 6 et 7 : il consiste à inverser ce mécanisme, c'est-à-dire à placer la culasse (45) et l'aimant (40) à l'extérieur et les stators (41 à 44) à l'intérieur.

Les stators (41 à 44) deviennent alors des demi-lunes et la culasse (45) devient un tube ferromagnétique. L'aimant (40) reste un aimant demi bague aimanté radialement et peut être mobile entre le stator (41 à 44) et la culasse (45) ou encore collé sur cette dernière.

Dans cette architecture, on ajoutera les signaux fournis par les sondes (50) et (51), à savoir les sondes dont la surface sensible est perpendiculaire à l'axe de rotation X, pour obtenir un signal linéaire en fonction du déplacement linéaire de l'aimant selon l'axe X. D'autre part, on ajoutera les signaux fournis par les sondes (52) et (53), à savoir les sondes dont la surface sensible est parallèle à l'axe de rotation X, pour obtenir un signal linéaire en fonction de la rotation de l'aimant selon l'axe X. La course angulaire sera limitée à 180°, et on aura en pratique un signal linéaire sur une course de l'ordre de 160°.

On obtient finalement deux signaux indépendants, linéaires respectivement par rapport à la rotation et au déplacement selon un même axe X.

Une variante de cette solution est représentée en figure 8. Elle consiste à pratiquer des chanfreins (61 à 64) sur les stators (41 à 44) : on amplifie alors la sensibilité à la rotation du capteur en diminuant sa course angulaire.

De même que pour le capteur XY linéaire, la somme des signaux est facilement réalisable par un montage sommateur. On pourra également utiliser un circuit intégré comprenant directement l'élément sensible à la variation d'induction et les fonctions de compensation de température de l'aimant.

La figure 9 représente une vue schématique d'un capteur sphérique à deux degrés de liberté en rotation.

Le système est alors composé de 4 types de pièces:
- Un aimant (70), représenté en figure 10 en vue éclatée, composé de deux demi-aimants (76) et (77). Ces deux demi-aimants sont des demi-sphères, sont obtenus de préférence par moulage et aimantés radialement. L'aimant (70) pourra être fixé sur la culasse (75) de forme sphérique ou mobile entre les stators et la culasse.
- 4 stators ferromagnétiques (71 à 74) entourant l'aimant (70). Dans le principe de base présenté dans la figure 9, ceux-ci ont une forme de quart de calotte sphérique. On verra que cette forme pourra être modifiée dans les réalisations industrielles de ce type de capteur.
- 4 sondes de Hall (81 à 84) ou tout autre élément sensible à la variation de l'induction magnétique, placés entre les stators (71 à 74) comme représenté en figure 9.
- 1 culasse ferromagnétique sphérique (75)

En faisant tourner l'aimant suivant les 2 axes X et Y, on va créer une modification d'induction magnétique dans les 4 entrefers dans lesquels on a placé les sondes.

L'addition des signaux fournis par les sondes (81) et (82) nous donnera un signal linéaire en fonction de la rotation de l'aimant suivant l'axe X.

L'addition des signaux fournis par les sondes (83) et (84) nous donnera un signal linéaire en fonction de la rotation de l'aimant suivant l'axe Y.

On obtient donc finalement 2 signaux indépendants et linéaires chacun en fonction de la rotation de l'aimant autour d'un des 2 axes susnommés.

Notons que la rotation autour du 3^{e} axe sera sans incidence sur les 2 signaux ainsi obtenus.

La figure 11 représente un mode de réalisation d'un capteur sphérique plus facile à industrialiser, pouvant notamment être utilisé dans la fabrication de joysticks et autres manettes à 2 degrés de liberté.

Tout d'abord, on peut limiter l'amplitude angulaire des stators et simplifier leur forme extérieure.

Les stators (71 à 74) ont alors une forme intérieure sphérique pour garder une distance constante à la surface extérieure de l'aimant et une surface extérieure qui est ici cylindrique, mais qui peut être adaptée selon les impératifs de construction.

D'autre part, on peut percer un demi-aimant (76), voire les deux, selon le nombre de liaisons mécaniques requises et les résultats souhaités, comme représenté en figure 12. Dans ce cas, le trou (78) pratiqué devra rester assez éloigné des stators lors du mouvement de la partie mobile pour que l'on garde des signaux corrects. La présence d'une telle cavité (78) permet de venir fixer une partie mécanique sur la culasse et donc d'assurer le lien entre ce dispositif de mesure et le mécanisme duquel on voudra mesurer le déplacement.

Enfin, on peut n'utiliser qu'un demi-aimant sphérique aimanté radialement. L'autre pourra alors le cas échéant être remplacé par une demi-sphère amagnétique pouvant servir de guidage dans un montage comme celui de la figure 11. Notons que dans ce cas l'amplitude de chacun des 2 signaux sera réduite de moitié.

Un mode de guidage de la sphère dans l'entrefer des stators (71 à 74) sera de créer une surface de frottement sur lequel elle viendra directement en contact. L'entrefer sera alors assuré par l'épaisseur de la matière réalisant ce guidage, matière bien sûr amagnétique.

Selon les exigences propres au mécanisme, on pourra alors choisir de faire frotter directement l'aimant ou de recouvrir celui-ci par une couche de matière appropriée pour diminuer les frottements, améliorer la durée de vie du mécanisme, etc.

La figure 11 représente une application de ce principe: on a noyé les stators (71 à 73) dans un surmoulage plastique qui assurera l'entrefer, la liaison mécanique entre les stators ainsi que le logement des sondes. Ce type de principe peut également être utilisé avec tout autre de procédé que le surmoulage: la couche plastique peut être collée, clipsée, ou montée de plusieurs façons différentes sur les stators.

Un autre principe consisterait à n'avoir qu'une demi-sphère d'aimant et à avoir sur la demi-sphère complémentaire une surface sphérique métallique qu'on pourrait guider sur une calotte métallique.

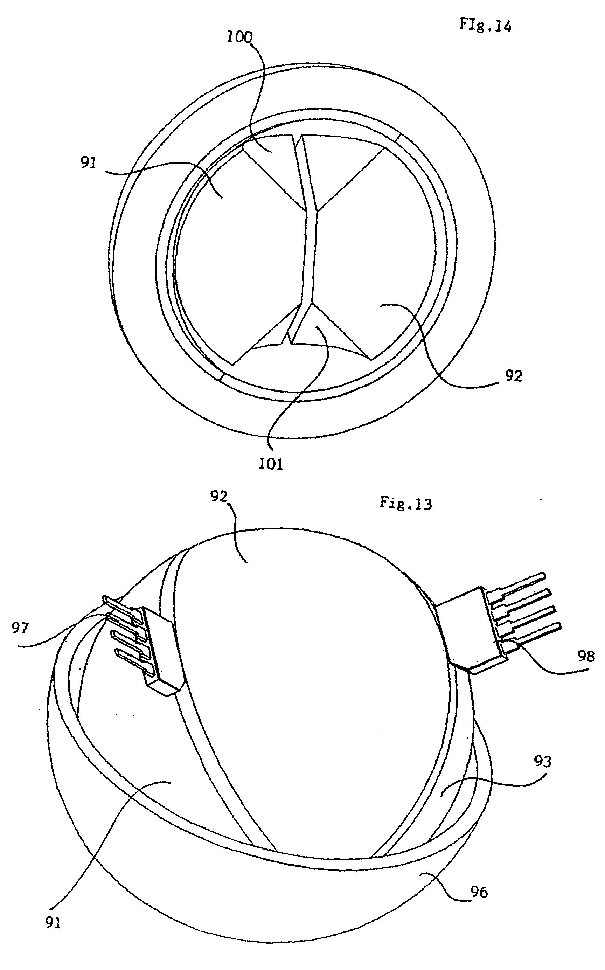

Enfin, ce mécanisme peut être inversé, à savoir que les stators (91 à 94) peuvent être disposés à l'intérieur de l'aimant (96). La culasse devient alors une sphère creuse et les stators (91 à 94) des quarts de sphère, conformément à la figure 13.

De la même manière que précédemment, on obtient 2 signaux indépendants, respectivement linéaires en fonction de la rotation suivant les axes X et Y.

Le premier sera la somme des signaux fournis par la sonde (97) et la sonde diamétralement opposée et le second la somme des signaux fournis par la sonde (98) et la sonde diamétralement opposée.

On garde la possibilité de n'avoir qu'une demi-sphère aimantée en perdant la moitié de l'amplitude du signal.

On pourra choisir de faire bouger l'aimant avec la culasse (en le collant dessus, par exemple) ou bien indépendamment de celle-ci, ou encore de le garder immobile pour faire bouger les stators. Dans ce cas, on peut utiliser le même type de montage que celui décrit pour la solution précédente.

Enfin, on peut imaginer plusieurs types de formes de stator, la figure 14 donnant un exemple d'une modification possible.

Les stators (91 à 94) présentent des méplats (100, 101) permettant de concentrer les flux magnétiques vers les sondes de Hall, et de faciliter la fixation d'un organe de liaison.

L'invention concerne non seulement les modes de réalisation décrit dans ce qui précède, mais également des variantes de réalisation. En particulier, il est possible de mettre en oeuvre non pas 4 sondes de Hall, mais deux sondes de Hall seulement, une par entrefer secondaire.

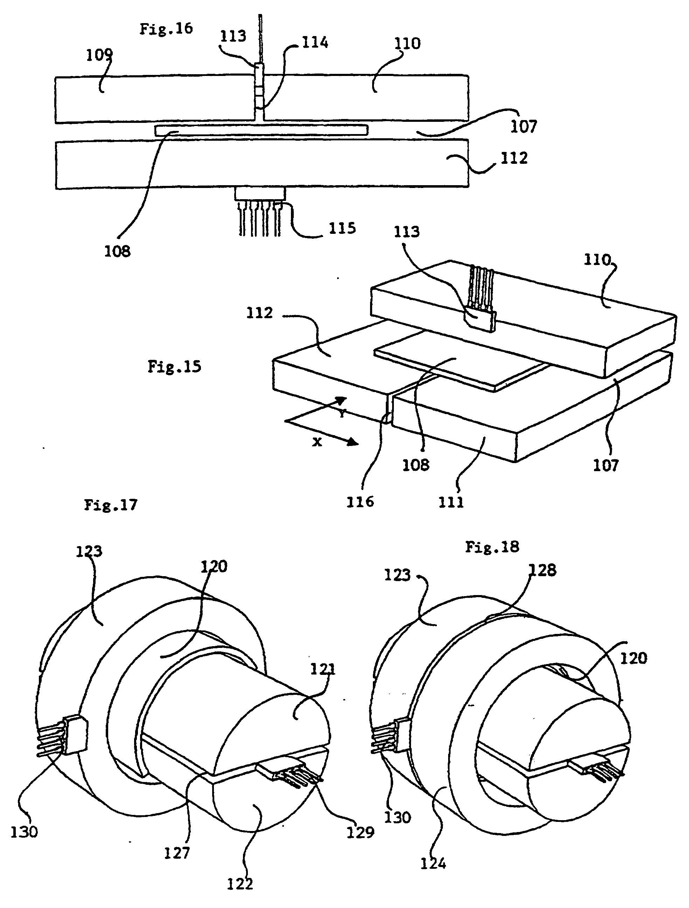

Les figures 15 et 16 représentent des vues en vue partielle et en vue transversale d'un capteur linéaire bidirectionnel à deux sondes de Hall. Ce système est composé des pièces suivantes :
- Un aimant plan (108), aimanté axialement dans la direction perpendiculaire à l'entrefer principal (107). Il sera mobile entre les stators.
- Une première paire de stators ferromagnétiques (109, 110) rectangulaires définissant un premier entrefer secondaire (114) ,
- Une deuxième paire de stators ferromagnétiques (111, 112) rectangulaires définissant un deuxième entrefer secondaire (116), orienté perpendiculairement au premier entrefer secondaire (114) ,
- 2 sondes de Hall (113) et (115) logés respectivement dans le premier et le deuxième entrefer secondaire.

Lorsque l'aimant se déplace dans son entrefer principal, suivant le plan (XY), il engendre une variation d'induction magnétique dans chacun des 2 entrefers secondaires, variation qui sera directement mesurée par les 2 sondes.

La sonde (115) fournira un signal directement linéaire en fonction du déplacement en X.

La sonde (113) fournira un signal directement linéaire en fonction du déplacement en Y.

Les figures 17 et 18 représentent des vues d'un capteur linéaire/rotatif à deux sondes de Hall. Cette variante permet de n'utiliser que 2 sondes de Hall. Le système est alors composé des pièces suivantes :
- Un demi-aimant bague (120), aimanté radialement. Il sera mobile entre les stators.
- 4 stators ferromagnétiques intérieurs (121, 122) et extérieurs (123, 124). Les stators intérieurs (121, 122) seront en forme - de demi-lunes, pourront éventuellement être chanfreinés. Ils définissent un premier entrefer secondaire (127) plan. Les stators extérieurs (123, 124) seront des bagues et définissent le deuxième entrefer secondaire (128) de forme annulaire.
- 2 sondes de Hall (129, 130).

Lorsque l'aimant se déplace dans son entrefer principal, en rotation et translation suivant l'axe (X), il engendre une variation d'induction magnétique dans chacun des 2 entrefers secondaires, variation qui sera directement mesurée par les 2 sondes.

La sonde (129) fournira un signal directement linéaire en fonction de la rotation de l'aimant suivant l'axe (X).

La sonde (130) fournira un signal directement linéaire en fonction de la translation de l'aimant suivant l'axe (X).

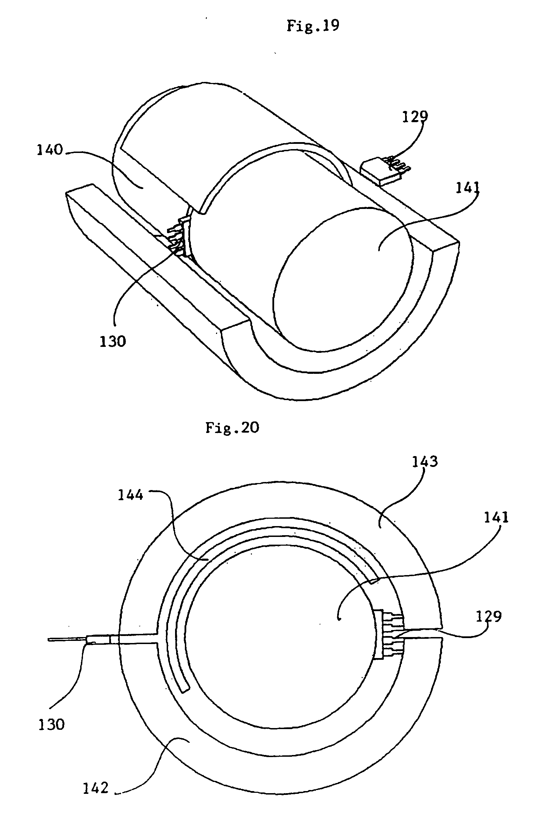

Ce principe peut être inversé par rapport à l'aimant pour obtenir le design proposé en figures 19 et 20. Les stators (140, 141) deviennent alors des cylindres intérieurs et les stators (142, 143) des demi-bagues extérieures.

## Revendications

1. Capteur de position comportant au moins une structure statorique définissant un entrefer secondaire à l'intérieur duquel est logée au moins une sonde de Hall, et un aimant mobile dans un entrefer principal, **caractérisé en ce que** la structure statorique est composée de pièces statoriques (1 à 4) définissant au moins un premier entrefer secondaire (6, 8) dans lequel est logée au moins une première sonde de Hall (12) délivrant un signal fonction du déplacement de l'aimant mobile (11) par rapport à un premier degré de liberté, et au moins un deuxième entrefer secondaire (7, 9) dans lequel est logée au moins une deuxième sonde de Hall (13) délivrant un signal fonction du déplacement de l'aimant mobile (11) par rapport à un deuxième degré de liberté.

2. Capteur de position selon la revendication 1 **caractérisé en ce qu'**il présente deux paires d'entrefers secondaires contenant chacun deux sondes de Hall disposées de part et d'autre de l'intersection de la première paire d'entrefers secondaires avec la deuxième paire d'entrefers secondaires, et des moyens de sommation des signaux électriques fournis par les sondes de Hall placées dans un même entrefer, pour délivrer un signal résultant sensiblement proportionnel à la position de l'aimant (14) selon le degré de liberté correspondant à chacune des paires de sondes de Hall.

3. Capteur de position selon la revendication 1 ou 2 **caractérisé en ce que** la structure statorique est composée de 4 pôles en un matériau magnétique doux définissant entre eux deux paires d'entrefers secondaires se croisant en un point médian et **en ce que** l'entrefer principal (10) est plan.

4. Capteur de position selon la revendication 3 **caractérisé en ce que** les pôles statoriques sont constitués par 4 pièces rectangulaires placés en vis-à-vis d'une culasse avec laquelle elles définissent un entrefer principal et définissant entre elles deux paires d'entrefers secondaires perpendiculaires.

5. Capteur de position selon l'une au moins des revendications précédentes **caractérisé en ce que** le rapport L/E entre l'épaisseur L de l'aimant et l'épaisseur E de l'entrefer est comprise entre 1 et 2.

6. Capteur de position selon l'une au moins des revendications précédentes **caractérisé en ce que** les dimensions des entrefers secondaires sont C₁+E et C₂+E, où C₁ et C₂ désignent la course de l'aimant mobile selon les deux directions des entrefers secondaires.

7. Capteur de position selon la revendication 1 ou 2 **caractérisé en ce que** l'aimant est de forme demi tubulaire et est mobile selon un premier degré de liberté en translation axiale et selon un second degré de liberté en rotation axiale par rapport à une structure statorique formée de 4 pôles statoriques de forme intérieure cylindrique, et **en ce qu'**il comporte une première paire de sondes de Hall placées dans une première paire d'entrefers secondaires dans le plan transversal médian de la structure statorique, pour la mesure de la position selon le premier degré de liberté, et une deuxième paire de sondes de Hall placées dans un second entrefer secondaire longitudinal constitué par les fentes longitudinales séparant les dites parties statoriques.

8. Capteur de position selon la revendication 1 ou 2 **caractérisé en ce que** l'aimant est de forme tubulaire et est mobile selon un premier degré de liberté en translation axiale et selon un second degré de liberté en rotation axiale par rapport à une structure statorique cylindrique formée de 4 pôles statoriques en forme de demi-cylindres, et **en ce qu'**il comporte une première paire de sondes de Hall placées dans une première paire d'entrefers secondaires dans le plan transversal médian de la structure statorique, pour la mesure de la position selon le premier degré de liberté, et une deuxième paire de sondes de Hall placées dans un second entrefer secondaire longitudinal dans le plan médian longitudinal séparant les demi-cylindres statoriques.

9. Capteur de position selon la revendication 8 **caractérisé en ce que** les bords longitudinaux des demi-cylindres statoriques sont chanfreinés.

10. Capteur de position selon la revendication 1 ou 2 **caractérisé en ce que** l'aimant est de forme sphérique et est mobile en rotation sphérique par rapport à une structure statorique en forme de calotte sphérique formée de 4 pôles statoriques en forme de secteur de calotte, et **en ce qu'**il comporte une première paire de sondes de Hall placées dans une première paire d'entrefers secondaires dans un premier plan médian de la structure statorique, pour la mesure de la position selon le premier degré de liberté, et une deuxième paire de sondes de Hall placées dans un second entrefer secondaire longitudinal dans un second plan médian.

11. Capteur de position selon la revendication 1 ou 2 **caractérisé en ce que** l'aimant est de forme sphérique et est mobile en rotation sphérique par rapport à une structure statorique de forme sphérique formée de 4 pôles statoriques de forme intérieure sphérique situés autour du plan équatorial de l'aimant, et **en ce qu'**il comporte une première paire de sondes de Hall placées dans une première paire d'entrefers secondaires dans un premier plan médian de la structure statorique, pour la mesure de la position selon le premier degré de liberté, et une deuxième paire de sondes de Hall placées dans un second entrefer secondaire longitudinal dans un second plan médian.

12. Capteur de position selon la revendication 1 ou 2 **caractérisé en ce que** l'aimant est de forme sphérique et est mobile en rotation sphérique autour d'une structure statorique de forme sphérique formée de 4 pôles statoriques en forme de quart de sphère, et **en ce qu'**il comporte une première paire de sondes de Hall placées dans une première paire d'entrefers secondaires dans un premier plan médian de la structure statorique, pour la mesure de la position selon le premier degré de liberté, et une deuxième paire de sondes de Hall placées dans un second entrefer secondaire longitudinal dans un second plan médian.

13. Capteur de position selon la revendication 12 **caractérisé en ce que** les secteurs statoriques présentent des chanfreins.

14. Capteur de position selon la revendication 1 **caractérisé en ce que** la structure statorique présente deux entrefers secondaires se croisant, chacun des deux entrefers secondaires étant muni d'une sonde de Hall.

15. Capteur de position selon la revendication 14 **caractérisé en ce qu'**il comporte une structure statorique définissant un entrefer principal plan, ainsi que deux entrefers secondaires perpendiculaires entre eux, chacun des entrefers secondaires étant muni d'une seule sonde de Hall.

16. Capteur de position selon la revendication 14 **caractérisé en ce qu'**il comporte un demi-aimant bague (120), aimanté radialement mobile entre les pièces statoriques constituées par 4 stators ferromagnétiques intérieurs (121, 122) et extérieurs (123, 124), les stators intérieurs (121, 122) étant en forme de demi-lunes, et définissant un premier entrefer secondaire (127) plan, les stators extérieurs (123, 124) étant des bagues définissant le deuxième entrefer secondaire (128) de forme annulaire, ainsi que deux sondes de Hall (129, 130) placées respectivement dans le premier et le second entrefer secondaire, l'une des sondes (129) fournissant un signal directement linéaire en fonction de la rotation de l'aimant suivant l'axe (X), l'autre sonde (130) fournissant un signal directement linéaire en fonction de la translation de l'aimant suivant l'axe (X).

17. Capteur de position selon la revendication 14 **caractérisé en ce qu'**il comporte un demi-aimant bague (120), aimanté radialement mobile entre les pièces statoriques constituées par 4 stators ferromagnétiques extérieurs (140, 141) et intérieurs (142, 143), les stators extérieurs (140, 141) étant en forme de demi-bagues, et définissant un premier entrefer secondaire, les stators intérieurs (140, 141) étant des cylindres définissant le deuxième entrefer secondaire (128) de forme annulaire, ainsi que deux sondes de Hall (129, 130) placées respectivement dans le premier et le second entrefer secondaire, l'une des sondes (129) fournissant un signal directement linéaire en fonction de la rotation de l'aimant suivant l'axe (X), l'autre sonde (130) fournissant un signal directement linéaire en fonction de la translation de l'aimant suivant l'axe (X).

## Patentansprüche

1. Positionsfühler mit zumindest einer statorischen Struktur, die einen sekundären Spalt definiert, in dem zumindest eine Hallsonde gelagert ist, und einem mobilen Magnet in einem Hauptspalt, **dadurch gekennzeichnet, dass** sich die statorische Struktur aus statorischen Teilen (1 bis 4) zusammen setzt, die zumindest einen ersten sekundären Spalt (6, 8) definieren, in dem zumindest eine erste Hallsonde (12) gelagert ist, die ein Funktionssignal von der Verschiebung des mobilen Magnets (11) im Verhältnis zu einem ersten Freiheitsgrad ausliefert, und zumindest einen zweiten sekundären Spalt (7, 9), in dem zumindest eine zweite Hallsonde (13) gelagert ist, die ein Funktionssignal von der Verschiebung des mobilen Magnets (11) im Verhältnis zu einem zweiten Freiheitsgrad ausliefert.

2. Positionsfühler nach Anspruch 1, **dadurch gekennzeichnet, dass** er zwei Paare an sekundären Spalten aufweist, die jeweils zwei Hallsonden umfassen, die beiderseits vom Schnittpunkt des ersten Paars und des zweiten Paars an sekundären Spalten angeordnet sind, und Mittel zur Summation der elektrischen Signale, die von den Hallsonden geliefert werden, die in einem selben Spalt platziert sind, um ein Endsignal auszuliefern, das fast proportional zu der Position vom Magnet (14) ist, gemäß dem Freiheitsgrad, der jedem der Paare an Hallsonden entspricht.

3. Positionsfühler nach Anspruch 1 oder 2, **dadurch gekennzeichnet, dass** sich die statorische Struktur aus 4 Polen aus einem weichen magnetischen Material zusammen setzt, die unter ihnen zwei Paare an sekundären Spalten definieren, die sich an einem Mittelpunkt kreuzen, und **dadurch gekennzeichnet, dass** der Hauptspalt (10) eben ist.

4. Positionsfühler nach Anspruch 3, **dadurch gekennzeichnet, dass** sich die statorischen Pole aus 4 rechteckigen Teilen zusammensetzten, die gegenüber einem Verschluss platziert sind, mit dem sie einen Hauptspalt definieren und die untereinander zwei Paare an senkrechten sekundären Spalten definieren.

5. Positionsfühler nach mindestens einem der vorhergehenden Ansprüche, **dadurch gekennzeichnet, dass** das Verhältnis L/E zwischen der Dicke L vom Magnet und der Dicke E von der Spalte zwischen 1 und 2 liegt.

6. Positionsfühler nach mindestens einem der vorhergehenden Ansprüche, **dadurch gekennzeichnet, dass** die Dimensionen der sekundären Spalte C₁+E und C₂+E sind, wo C₁ und C₂ den Hub des mobilen Magnets nach den beiden Richtungen der sekundären Spalten bezeichnen.

7. Positionsfühler nach Anspruch 1 oder 2, **dadurch gekennzeichnet, dass** der Magnet eine halb-röhrenförmige Form aufweist und mobil ist nach einem ersten Freiheitsgrad in axialer Translation und nach einem zweiten Freiheitsgrad in axialer Rotation im Verhältnis zu einer statorischen Struktur, die sich aus 4 statorischen Polen zusammensetzt, die eine innere zylindrische Form aufweisen, und **dadurch gekennzeichnet, dass** er ein erstes Paar an Hallsonden umfasst, die in einem ersten Paar an sekundären Spalten in der transversalen medianen Ebene von der statorischen Struktur platziert sind, für die Messung von der Position nach dem ersten Freiheitsgrad, und ein zweites Paar an Hallsonden, die in einem zweiten longitudinalen sekundären Spalt platziert sind, der sich aus longitudinalen Schlitzen zusammensetzt, die die genannten statorischen Teile trennen.

8. Positionsfühler nach Anspruch 1 oder 2, **dadurch gekennzeichnet, dass** der Magnet eine röhrenförmige Form aufweist und mobil ist nach einem ersten Freiheitsgrad in axialer Translation und nach einem zweiten Freiheitsgrad in axialer Rotation im Verhältnis zu einer zylindrischen statorischen Struktur, die sich aus 4 statorischen Polen zusammensetzt, die eine halb-zylindrische Form aufweisen, und **dadurch gekennzeichnet, dass** er ein erstes Paar an Hallsonden umfasst, die in einem ersten Paar an sekundären Spalten in der transversalen medianen Ebene von der statorischen Struktur platziert sind, für die Messung von der Position nach dem ersten Freiheitsgrad, und ein zweites Paar an Hallsonden, die in einem zweiten longitudinalen sekundären Spalt platziert sind, in der longitudinalen medianen Ebene, die die statorischen Halbzylinder trennt.

9. Positionsfühler nach Anspruch 8, **dadurch gekennzeichnet, dass** die longitudinalen Ränder der statorischen Halbzylinder abgeschrägt sind.

10. Positionsfühler nach Anspruch 1 oder 2, **dadurch gekennzeichnet, dass** der Magnet eine sphärische Form aufweist und mobil ist in sphärischer Rotation im Verhältnis zu einer statorischen Struktur in Form einer sphärischen Kalotte bestehend aus 4 statorischen Polen in Form eines Kalottensektors, und **dadurch gekennzeichnet, dass** er ein erstes Paar an Hallsonden umfasst, die in einem ersten Paar an sekundären Spalten in einer ersten medianen Ebene von der statorischen Struktur platziert sind, für die Messung von der Position nach dem ersten Freiheitsgrad, und ein zweites Paar an Hallsonden, die in einem zweiten longitudinalen sekundären Spalt in einer zweiten medianen Ebene platziert sind.

11. Positionsfühler nach Anspruch 1 oder 2, **dadurch gekennzeichnet, dass** der Magnet eine sphärische Form aufweist und mobil ist in sphärischer Rotation im Verhältnis zu einer statorischen Struktur in sphärischer Form bestehend aus 4 statorischen Polen mit sphärischer innerer Form, die sich um die äquatoriale Ebene des Magnets befinden, und **dadurch gekennzeichnet, dass** er ein erstes Paar an Hallsonden umfasst, die in einem ersten Paar an sekundären Spalten in einer ersten medianen Ebene von der statorischen Struktur platziert sind, für die Messung von der Position nach dem ersten Freiheitsgrad, und ein zweites Paar an Hallsonden, die in einem zweiten longitudinalen sekundären Spalt in einer zweiten medianen Ebene platziert sind.

12. Positionsfühler nach Anspruch 1 oder 2, **dadurch gekennzeichnet, dass** der Magnet eine sphärische Form aufweist und mobil ist in sphärischer Rotation um eine statorische Struktur in sphärischer Form bestehend aus 4 statorischen Polen in Form einer Viertelkugel, und **dadurch gekennzeichnet, dass** er ein erstes Paar an Hallsonden umfasst, die in einem ersten Paar an sekundären Spalten in einer ersten medianen Ebene von der statorischen Struktur platziert sind, für die Messung von der Position nach dem ersten Freiheitsgrad, und ein zweites Paar an Hallsonden, die in einem zweiten longitudinalen sekundären Spalt in einer zweiten medianen Ebene platziert sind.

13. Positionsfühler nach Anspruch 12, **dadurch gekennzeichnet, dass** die statorischen Strukturen Abschrägungen aufweisen.

14. Positionsfühler nach Anspruch 1, **dadurch gekennzeichnet, dass** die statorische Struktur zwei sich kreuzende sekundäre Spalten aufweist, wobei jede von den beiden sekundären Spalten mit einer Hallsonde ausgerüstet ist.

15. Positionsfühler nach Anspruch 14, **dadurch gekennzeichnet, dass** er eine statorische Struktur umfasst, die eine ebene Hauptspalte definiert, sowie zwei senkrecht zueinander stehende sekundäre Spalten, wobei jede von den beiden sekundären Spalten mit einer einzigen Hallsonde ausgerüstet ist.

16. Positionsfühler nach Anspruch 14, **dadurch gekennzeichnet, dass** er folgendes umfasst: ein Halb-Magnet-Ring (120), radial mobil magnetisiert zwischen den statorischen Teilen, die sich aus 4 inneren (121, 122) und äußeren (123, 124) ferromagnetischen Statoren zusammen setzen, wobei die inneren Statoren (121, 122) die Form eines Halbmondes aufweisen, und einen ersten ebenen sekundären Spalt (127) definieren, wobei die äußeren Statoren (123, 124) Ringe sind, die den zweiten ebenen sekundären Spalt (128) mit ringförmiger Form definieren, sowie zwei Hallsonden (129, 130), die jeweils in der ersten und in der zweiten sekundären Spalte platziert sind, wobei die eine von den Sonden (129) ein direkt lineares Signal gemäß der Rotation des Magnets nach der Achse (X) ausliefert, und wobei die andere Sonde (130) ein direkt lineares Signal gemäß der Translation des Magnets nach der Achse (X) ausliefert.

17. Positionsfühler nach Anspruch 14, **dadurch gekennzeichnet, dass** er folgendes umfasst: ein Halb-Magnet-Ring (120), radial mobil magnetisiert zwischen den statorischen Teilen, die sich aus 4 äußeren (140, 141) und inneren (142, 143) ferromagnetischen Statoren zusammen setzen, wobei die äußeren Statoren (140, 141) die Form eines Halbrings aufweisen, und einen ersten sekundären Spalt definieren, wobei die inneren Statoren (140, 141) Zylinder sind, die den zweiten sekundären Spalt (128) mit ringförmiger Form definieren, sowie zwei Hallsonden (129, 130), die jeweils in der ersten und in der zweiten sekundären Spalte platziert sind, wobei die eine von den Sonden (129) ein direkt lineares Signal gemäß der Rotation des Magnets nach der Achse (X) ausliefert, und wobei die andere Sonde (130) ein direkt lineares Signal gemäß der Translation des Magnets nach der Achse (X) ausliefert.

## Claims

1. Position sensor comprising at least one stator structure defining a secondary air gap inside which at least one Hall probe is located, with a mobile magnet in a principal air gap, **characterised in that** the stator structure is composed of stator parts (1 to 4) defining at least one first secondary air gap (6, 8) within which at least one first Hall probe (12) is located outputting a signal that depends on the displacement of the mobile magnet (11) free to move according to a first degree of freedom, and at least one second secondary air gap (7, 9) in which at least one second Hall probe (13) is located outputting a signal that depends on the displacement of the mobile magnet (11) free to move according to a second degree of freedom.

2. Position sensor according to claim 1, **characterised in that** it has two pairs of secondary air gaps each containing two Hall probes arranged on each side of the intersection of the first pair of secondary air gaps with the second pair of secondary air gaps, and means of summating the electrical signals output by Hall probes placed in the same air gap, to output a resultant signal approximately proportional to the position of the magnet (14) within the degree of freedom corresponding to each of the Hall probe pairs.

3. Position sensor according to claim 1 or 2,
**characterised in that** the stator structure is composed of four poles made of a soft magnetic material such that two pairs of secondary air gaps are defined between them crossing at a median point, and **in that** the principal air gap (10) is plane.

4. Position sensor according to claim 3, **characterised in that** the stator poles are composed of four rectangular parts facing a cylinder head with which they define a principal air gap and that together define two pairs of perpendicular secondary air gaps.

5. Position sensor according to at least one of the previous claims, **characterised in that** the L/E ratio between the thickness L of the magnet and the thickness E of the air gap is between 1 and 2.

6. Position sensor according to at least one of the above claims, **characterised in that** the dimensions of the secondary air gaps are C₁+E and C₂+E where C₁ and C₂ denote the travel distance of the mobile magnet along the two directions of the secondary air gaps.

7. Position sensor according to claim 1 or 2, **characterised in that** the magnet is of the half-tubular shape and it is free to move according to a first degree of freedom in axial translation and according to a second degree of freedom in axial rotation with respect to a stator structure formed from four stator poles with a cylindrical internal shape, and **in that** it comprises a first pair of Hall probes placed in a first pair of secondary air gaps in the median transverse plane of the stator structure, to measure the position according to the first degree of freedom, and a second pair of Hall probes placed in a second longitudinal secondary air gap composed of longitudinal slits separating the said stator parts.

8. Position sensor according to claim 1 or 2, **characterised in that** the magnet is of the tubular shape and is free to move according a first degree of freedom in axial translation and according to a second degree of freedom in axial rotation with respect to a cylindrical stator structure composed of four stator poles arranged in half-cylindrical form, and **in that** it comprises a first pair of Hall probes placed in a first pair of secondary air gaps in the median transverse plane of the stator structure to measure the position according to the first degree of freedom, and a second pair of Hall probes placed in a second longitudinal secondary air gap in the longitudinal median plane separating the stator half-cylinders.

9. Position sensor according to claim 8, **characterised in that** the longitudinal edges of the stator half-cylinders are chamfered.

10. Position sensor according to claim 1 or 2, **characterised in that** the magnet is spherical and moves in spherical rotation about a stator structure shaped like a spherical cap formed from four stator poles arranged around the cap, and **in that** it comprises a first pair of Hall probes located in a first pair of secondary air gaps in a first median plane of the stator structure to measure the position according to the first degree of freedom, and a second pair of Hall probes placed in a second longitudinal secondary air gap in a second median plane.

11. Position sensor according to claim 1 or 2, **characterised in that** the magnet is spherical in shape and moves in spherical rotation with respect to a spherical stator structure composed of four stator poles with a spherical inner shape located around the equatorial plane of the magnet, and **in that** it comprises a first pair of Hall probes located in a first pair of secondary air gaps in a first median plane of the stator structure to measure the position according to the first degree of freedom, and a second pair of Hall probes placed in a second longitudinal secondary air gap in a second median plane.

12. Position sensor according to claim 1 or 2, **characterised in that** the magnet is spherical and moves in spherical rotation with respect to a spherically shaped stator structure composed of four stator poles in the shape of a quarter of a sphere, and **in that** it comprises a first pair of Hall probes located in a first pair of secondary air gaps in a median plane of the stator structure to measure the position according to the first degree of freedom, and a second pair of Hall probes placed in a second longitudinal secondary air gap in a second median plane.

13. Position sensor according to claim 12, **characterised in that** the stator sectors have chamfers.

14. Position sensor according to claim 1, **characterised in that** the stator structure has two secondary air gaps that intersect, each of the two secondary air gaps being provided with a Hall probe.

15. Position sensor according to claim 14, **characterised in that** it comprises a stator structure defining a plane principal air gap, and two secondary air gaps perpendicular to each other, each secondary air gap being provided with a single Hall probe.

16. Position sensor according to claim 14, **characterised in that** it comprises a ring half-magnet (120), magnetised and free to move in the radial direction between stator parts composed of four ferromagnetic inner stators (121, 122) and outer stators (123, 124), the inner stators (121, 122) being in the form of half-moons, and defining a first plane secondary air gap (127), the outer stators (123, 124) being rings defining the second annular-shaped secondary air gap (128), and two Hall probes (129, 130) one (129) placed in the first secondary air gap and the second (130) placed in the second secondary air gap, one of the probes (129) outputting a linear signal directly as a function of the rotation of the magnet about the X axis, the other probe (130) outputting a linear signal directly as a function of the translation of the magnet along the X axis.

17. Position sensor according to claim 14, **characterised in that** it comprises a ring half-magnet (120), magnetised and free to move in the radial direction between stator parts composed of four ferromagnetic stators, with two outer stators (140, 141) and two inner stators (142, 143), the outer stators (140, 141) being in the form of half-rings and defining a first secondary air gap, the inner stators (140, 141) being cylinders defining the second annular-shaped secondary air gap (128), and two Hall probes (129, 130) one (129) placed in the first secondary air gap and the second (130) placed in the second secondary air gap, one of the probes (129) outputting a linear signal directly as a function of the rotation of the magnet about the X axis, the other probe (130) outputting a linear signal directly as a function of the translation of the magnet along the X axis.
